# EUROPEAN PATENT SPECIFICATION

(11) **EP 0 332 401 B1**
(45) Date of publication and mention of the grant of the patent: **23.02.1994**
(21) Application number: 89302271.5
(22) Date of filing: 07.03.1989
(51) Int. Cl.: G02F 1/133, G02F 1/1343

(54) **Improvements in liquid crystal displays**
Flüssigkristallanzeige-Vorrichtungen
Dispositifs d'affichage à cristal liquide

(30) Priority: 07.03.1988 JP 54466/88
(43) Date of publication of application: 13.09.1989
(73) Proprietor: SEMICONDUCTOR ENERGY LABORATORY CO., LTD., Atsugi-shi Kanagawa-ken, 243 (JP)
(72) Inventor: Yamazaki, Shunpei, Setagaya-ku Tokyo (JP); Fukada, Takeshi, Ebina-shi Kangawa-ken (JP); Sakama, Mitsunori, Kanagawa-ken (JP); Amachi, Nobumitsu, Atsugi-shi Kanagawa-ken (JP); Sakamoto, Naoya, Atsugi-shi Kanagawa-ken (JP); Codama, Mitsufumi, Atsugi-shi Kanagawa-ken (JP); Fukui, Takashi, Atsugi-shi Kanagawa-ken (JP); Takayama, Ichiro, Atsugi-shi Kanagawa-ken (JP)
(74) Representative: Milhench, Howard Leslie

(56) References cited:
- US-A- 4 181 563
- US-A- 4 728 176
- PATENT ABSTRACTS OF JAPAN, vol. 9, no. 252 (M-420)[1975], 9th October 1985; & JP-A-60 102 289
- PATENT ABSTRACTS OF JAPAN, vol. 5, no. 126 (P-75)[798], 14th August 1981; & JP-A-56 66 821

## Description

### BACKGROUND OF THE INVENTION

The present invention concerns improvements in liquid crystal displays and more particularly relates to liquid crystal displays capable of producing high contrast images.

Liquid crystal displays are representative compact display devices which have been widely used in many electric appliances. Because liquid crystal materials do not have any light emitting ability and are driven by means of a pair of electrodes between which a liquid crystal layer is disposed, electrode arrangements made of a conductive transparent oxide (CTO) material have to be formed over the whole plane of the display area. The resistivies of such CTOs are relatively high, however, as compared with other conducting materials and may for example be not lower than 2 x 10⁻⁴ ohm centimeter. Such high resistivities can give rise to problems with display address circuits and these cannot be overcome simply by increasing the electrode thickness since this decreases the brightness of the display.

US 4181563 discloses a method of forming an electrode pattern for a display device, in which the patent comprises interdigitated comb electrodes, and said electrodes are formed by laser scribing using a YAG laser.

US 4728176 discloses a prior art structure in which an electrode pattern for a display device comprises a plurality of strip electrodes each comprising a strip of transparent conductive material with, over one edge thereof, a linear conductor formed of an opaque conductive material having a lower resistivity than the transparent conductive material. However, US 4728176 proposes an improved method of forming a similar structure, by providing the linear conductor interspersed in a layer of resistive material and then providing the transparent conductive material over the top, by the steps of forming a film of the opaque conductive material; masking and etching the opaque conductive material into stripes; forming an insulating film between the stripes by a lift-off masking process; and finally forming a film of the transparent conductive material over the opaque material and the insulating material and etching the transparent material to leave stripe electrodes.

According to the present invention, there is provided a method for forming an electrode pattern for a display device, said pattern comprising a plurality of strip electrodes each comprising a strip of transparent conductive material and, over edge regions thereof, a linear conductor formed of an opaque conductive material having a lower resistivity than said transparent conductive material, said method being characterised by the steps of:
forming a film of said transparent conductive material on a substrate;
forming a layer of said opaque conductive material over regions of said film where said edge regions are to be formed; and
laser scribing through said regions of said opaque conductive material and the underlying film, so as simultaneously to divide each of said regions into two and to divide the underlying film into said strips thereby defining the edges of the strips.

The removal of the transparent conductive material together with the overlying opaque conductive material by laser scribing is a particularly advantageous way of forming the separations between the strip electrodes. When a conductive transparent material film is scribed in isolation without any overlying opaque conductive material, we have found that projections of 2 to 10µm height can be formed at the edges of the transparent conductive material strip. By successively depositing the two materials and then scribing through both together, the requirement for a separate stage of elimination of these projections can be dispensed with.

The opaque conductive material can be formed into said regions prior to said laser scribing by an initial laser etching step, by an initial masking and etching step, or by depositing said opaque conductive material over a mask covering the area between said regions and removing said mask.

Other features of the present invention are set forth in the appended claims and, together with advantages thereof, will be well appreciated by those possessed of the relevant skills from a reading of the following description given with reference to the accompanying drawings.

### BRIEF DESCRIPTION OF THE DRAWINGS

Fig.1 is a cross-sectional view showing an exemplary liquid crystal display in accordance with the present invention;
Figs.2(A) to 2(C) are cross-sectional views showing an exemplary procedure for forming an electrode pattern on a glass substrate in the manufacture of a liquid crystal display in accordance with the present invention;
Fig.3 is a partial plan view of an exemplary electrode pattern in a liquid crystal display in accordance with the present invention; and
Figs.4(A) to 4(D) are cross-sectional views showing another exemplary procedure for forming an electrode pattern on a glass substrate in the manufacture of a liquid crystal display in accordance with the present invention.

### DETAILED DESCRIPTION OF THE EMBODIMENTS

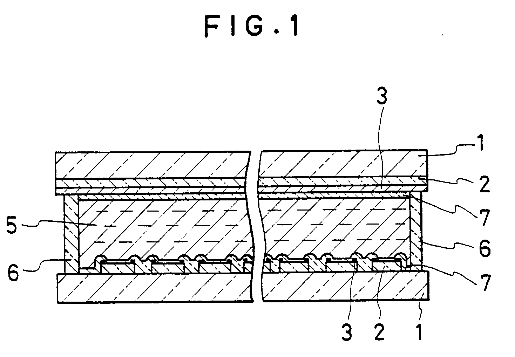

Referring now to Fig.1 an exemplary liquid crystal display in accordance with the present invention is illustrated. The display comprises a pair of glass substrates 1, electrode arrangements 2 formed on the inner surfaces of the substrates 1 and opposed to each other, orientation control films 7 formed over the electrode arrangements 2, and a liquid crystal layer 5 of a chiral smectic C or supernematic liquid crystal material. The distance between the substrates 1 is kept constant by means of spacers (not shown). The periphery of the display is provided with sealing means 6 for retaining the liquid crystal material.

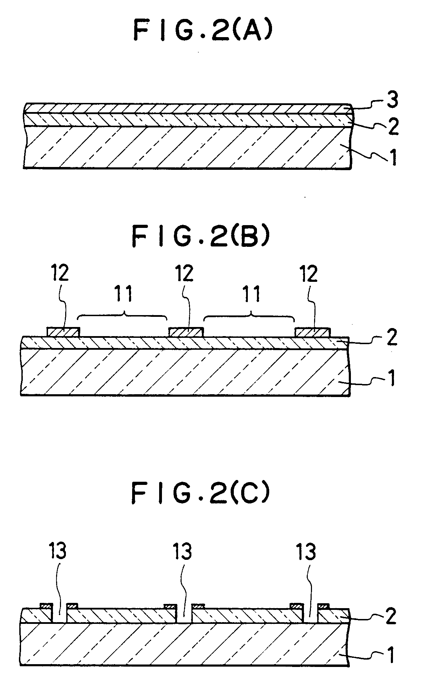

The electrode arrangements 2 are comprised respectively of a first set of parallel electrode strips provided on one of the substrates 1 and a second set of parallel electrode strips provided on the other substrate and extending orthogonally to the first set in order to define between the two sets of electrode strips a plurality of display pixels of 300 microns x 300 microns in a matrix consisting of 640 x 500 dots. Each electrode strip is comprised of a transparent conductive film and two metallic lines (opaque electrodes) formed along the edges of the transparent conductive film. One exemplary method of forming such an electrode structure will now be explained with reference to Figs. 2(A) to 2(C).

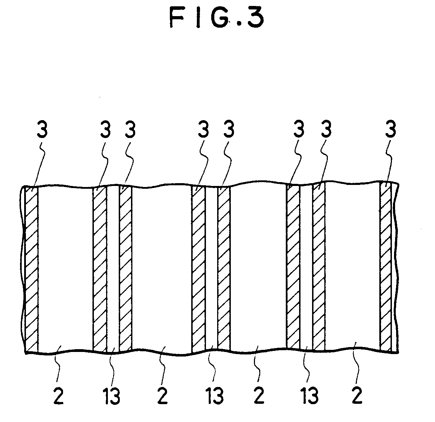

A CTO film 2 made of a material such as In₂0₂Sn0₂ (ITO), Zn0₂ or Sn0₂ is deposited on a glass substrate 1 to a thickness of from 500 to 2000Å, e.g. 1000 . The light transmissivity of such CTO films is typically 60% or greater at a wavelength of 555nm. On top of the ITO film there is formed a metallic film 3 such as of Cr, Ti, Al, W or Mo for example. The thickness of the film 3 may be 500Å for example. Both films 2 and 3 may be formed by sputtering, CVD or evaporation for example. The metallic film 3 is then patterned by laser scribing to form a plurality of 30µm wide strips 12 which are separated from each other by spaces 11 of 300µm as shown in Fig.2(B). The laser beam used for this scribing operation may be generated by a KF excimer laser and shaped by an optical system to have a cross section of 10µm x 30cm. The metallic film 3 is irradiated with and at the same time moved relative to the laser beam in order to remove the metallic material positioned in the spaces 11. Next, the centre portion of each metallic strip 12 together with the underlying ITO film is removed by laser scribing in the same manner so as to form isolating grooves 13 as illustrated in Fig.2(C). A plan view or the structure is shown in Fig.3.

Alternatively, the formation of the spaces 11 can be performed by conventional photolithography using photoresist and masks. The etchants used in this case may be (NH₄)₂Ce(N0₃)₆ for etching the metallic (Cr) film 3.
After etching of the metallic film 3, the formation of the grooves 13 is performed by laser scribing.

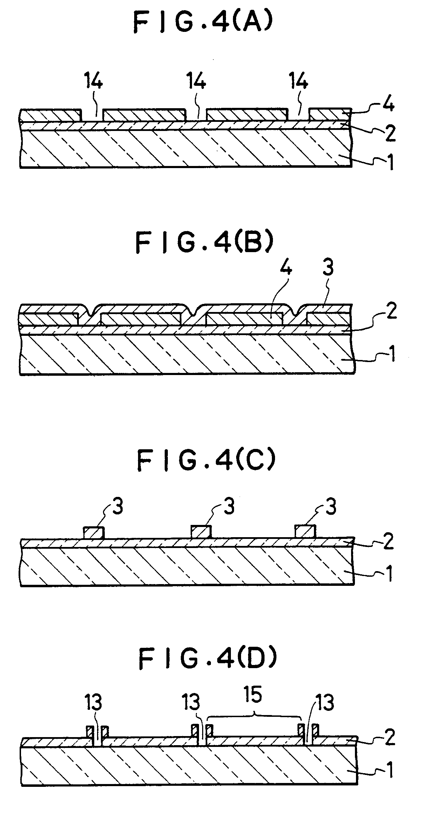

Figs.4(A) to 4(D) illustrates another embodiment of the present invention. After depositing an ITO film 2 on a glass substrate 1, a photoresist pattern consisting of a plurality of 300µm wide strips 4 separated by grooves 14 of 30µm width is formed. A Cr film 3 is coated over the structure. The portions of the Cr film located just above the photoresist strips are removed when the photoresist 4 is removed with a solvent. As a result, the structure shown in Fig.4(C) is obtained. Then, grooves 13 are formed by laser scribing using a laser beam of 5 to 10µm x 30cm cross-section in the same manner as in the previously described embodiment.

The removal of the ITO material together with the overlying metallic material by laser scribing is a particularly advantageous way of forming the grooves 13. When an ITO film alone is scribed without there being any overlying strips, projections of 2 to 10µm height can be formed at the edges of the ITO strip. By scribing both layers together the requirement for elimination of these projections can be dispensed with.

The resistivity of ITO is typically 2.0 to 5.0 x 10⁻⁴ ohm centimeter. The sheet resistance of the ITO strips is 30 ohm/cm² in the case where the resistivity of the ITO is 3.0 x 10⁻⁴ ohm centimeter. This gives rise to a resistance of 22kΩ measured between the ends of a 240mm ITO strip. By providing metallic lines of Cr bordering the ITO strip in accordance with the present invention, the strip resistance can be reduced to from 12 to 13 kΩ. If the metallic lines are formed from Ti, Al or W, the resistance can be further reduced to a resistance of the order of one tenth of the conventional level.

By arranging two glass substrates provided with electrode arrangements as above described in orthogonal relation, a plurality of pixels are defined, and since each pixel is bordered by opaque metallic lines, therefore the display contrast is improved.

While several embodiments of the invention have been specifically described, it is to be appreciated that the present invention is not limited to the particular examples described and that modifications and variations can be made without departure from the scope of the invention as defined by the appended claims. For example, although the embodiments are transmission mode liquid crystal devices, the present invention can also be applied to reflection mode devices. In the case of reflection mode devices, one of the glass substrates 1 may be replaced by an opaque substrate, and conventional reflective metallic strips may be employed as the electrode arrangement thereon instead of the composite electrode structure of the present invention.

## Claims

1. A method of forming an electrode pattern for a display device, said pattern comprising a plurality of strip electrodes each comprising a strip (2) of transparent conductive material and, over edge regions thereof, a linear conductor (3) formed of an opaque conductive material having a lower resistivity than said transparent conductive material, said method being characterised by the steps of:
forming a film of said transparent conductive material on a substrate (1);
forming a layer of said opaque conductive material over regions of said film where said edge regions are to be formed; and
laser scribing through said regions of said opaque conductive material and the underlying film, so as simultaneously to divide each of said regions into two and to divide the underlying film into said strips thereby defining the edges of the strips.

2. A method according to claim 1 wherein said transparent conductive material is a conductive oxide material.

3. A method according to claim 2 wherein said conductive oxide material is ITO, Sn0₂ or Zn0₂.

4. A method according to any preceding claim wherein said opaque conductive material is a metal.

5. A method according to claim 4 wherein said metal is Cr, Ti, Al, W or Mo.

6. A method according to any preceding claim wherein said display device comprises a pair of parallel substrates (1), at least one of which is transparent, and said electrode pattern comprises a first plurality of parallel strip electrodes formed on one of said substrates and a second plurality of parallel strip electrodes formed on the other substrate, said first and second pluralities of strips being arranged in orthogonal relation with respect to each other.

7. A method according to any preceding claim, in which said regions of said opaque conductive material are formed by forming a film of said opaque conductive material, and then removing said material between said regions.

8. A method according to claim 7, in which said step of removing is performed by photolithography and chemical etching.

9. A method according to claim 7, in which said step of removing is performed by laser scribing.

10. A method according to any of claims 1 to 6, in which said regions of said opaque conductive material are formed by applying a photoresist mask over said film of transparent conductive material, forming a film of said opaque conductive material over said mask and transparent conductive material, and removing said mask together with the overlying portions of said opaque conductive material.

11. A method according to any preceding claim, wherein said laser scribing is by an excimer laser.

12. A method according to any preceding claim, wherein the width of said opaque conductive material regions prior to laser scribing is about 30µm.

13. A method according to any preceding claim in which the thickness of said transparent conductive material is between 50-200nm.

## Patentansprüche

1. Verfahren zum Herstellen eines Elektrodenmusters für eine Anzeigevorrichtung, welches Muster mehrere streifenförmige Elektroden aufweist, von denen jede einen Streifen (2) aus lichtdurchlässigem, leitendem Material und, über Kantenbereichen desselben, einen linearen Leiter (3) aufweist, der aus einem lichtundurchlässigen, leitenden Material mit kleinerem spezifischem Widerstand besteht, als ihn das lichtdurchlässige, leitende Material aufweist, welches Verfahren durch die folgenden Schritte gekennzeichnet ist:
- Ausbilden eines Films des lichtdurchlässigen, leitenden Materials auf einem Substrat (1);
- Ausbilden einer Schicht des lichtundurchlässigen, leitenden Materials über einem Bereich des Films, in dem die Kantenbereiche zu bilden sind; und
- Ausführen eines Laserschreibvorgangs durch die genannten Bereiche des lichtundurchlässigen, leitenden Materials und den darunterliegenden Film, um jeden der Bereiche gleichzeitig zweizuteilen und den darunterliegenden Film in die Streifen aufzuteilen, wodurch die Kanten der Streifen festgelegt werden.

2. Verfahren nach Anspruch 1, bei dem das lichtdurchlässige, leitende Material ein leitendes Oxidmaterial ist.

3. Verfahren nach Anspruch 2, bei dem das leitende Oxidmaterial ITO, SnO₂ oder ZnO₂ ist.

4. Verfahren nach einem der vorstehenden Ansprüche, bei dem das lichtundurchlässige, leitende Material ein Metall ist.

5. Verfahren nach Anspruch 4, bei dem das Metall Cr, Ti, Al, W oder Mo ist.

6. Verfahren nach einem der vorstehenden Ansprüche, bei dem die Anzeigevorrichtung ein Paar paralleler Substrate (1) aufweist, von denen mindestens eines lichtdurchlässig ist, und das Elektrodenmuster eine erste Vielzahl paralleler, streifenförmiger Elektroden, die auf einem der Substrate ausgebildet sind, und eine zweite Vielzahl paralleler, streifenförmiger Elektroden, die auf dem anderen Substrat ausgebildet sind, aufweist, wobei die erste und zweite Vielzahl der Streifen rechtwinklig zueinander angeordnet sind.

7. Verfahren nach einem der vorstehenden Ansprüche, bei dem die Bereiche des lichtundurchlässigen, leitenden Materials dadurch ausgebildet werden, daß ein Film des lichtundurchlässigen, leitenden Materials ausgebildet wird und dann das Material zwischen den Bereichen beseitigt wird.

8. Verfahren nach Anspruch 7, bei dem der Schritt des Beseitigens durch Photolithographie und chemisches Ätzen ausgeführt wird.

9. Verfahren nach Anspruch 7, bei dem der Schritt des Beseitigens durch einen Laserschreibvorgang ausgeführt wird.

10. Verfahren nach einem der Ansprüche 1 bis 6, bei dem die Bereiche des lichtundurchlässigen, leitenden Materials dadurch ausgebildet werden, daß eine Photoresistmaske über dem Film aus lichtdurchlässigem, leitendem Material aufgebracht wird, ein Film aus dem lichtundurchlässigen, leitenden Material über der Maske und dem lichtdurchlässigen, leitenden Material ausgebildet wird, und die Maske zusammen mit den darüberliegenden Abschnitten des lichtundurchlässigen, leitenden Materials entfernt wird.

11. Verfahren nach einem der vorstehenden Ansprüche, bei dem der Laserschreibvorgang durch einen Excimerlaser erfolgt.

12. Verfahren nach einem der vorstehenden Ansprüche, bei dem die Breite der Bereiche des lichtundurchlässigen, leitenden Materials vor dem Laserschreibvorgang ungefähr 30µm beträgt.

13. Verfahren nach einem der vorstehenden Ansprüche, bei dem die Dicke des lichtdurchlässigen, leitenden Materials zwischen 50-200nm beträgt.

## Revendications

1. Procédé de formation d'un motif d'électrodes pour un dispositif d'affichage, ledit motif comprenant plusieurs électrodes en forme de bandes qui comprennent chacune une bande (2) de matériau conducteur transparent et, sur des régions marginales de celle-ci, un conducteur linéaire (3) réalisé en un matériau conducteur opaque ayant une résistivité inférieure à celle dudit matériau conducteur transparent, ledit procédé étant caractérisé par les étapes qui consistent:
- à former un film constitué dudit matériau conducteur transparent sur un substrat (1);
- à former une couche constituée dudit matériau conducteur opaque sur des régions dudit film où lesdites régions marginales sont appelées à être formées; et
- à graver au laser, dans le sens de l'épaisseur, lesdites régions dudit matériau conducteur opaque et le film sous-jacent, de façon à simultanément scinder en deux chacune desdites régions et subdiviser le film sous-jacent pour former lesdites bandes, définissant ainsi les bords des bandes.

2. Procédé selon la revendication 1, dans lequel ledit matériau conducteur transparent est un oxyde conducteur.

3. Procédé selon la revendication 2, dans lequel ledit oxyde conducteur est du ITO, du SnO₂ ou du ZnO₂.

4. Procédé selon l'une quelconque des revendications précédentes, dans lequel ledit matériau conducteur opaque est un métal.

5. Procédé selon la revendication 4, dans lequel ledit métal est Cr, Ti, Al, W ou Mo.

6. Procédé selon l'une quelconque des revendications précédentes, dans lequel ledit dispositif d'affichage comprend deux substrats parallèles (1), dont l'un au moins est transparent, et ledit motif d'électrodes comprend un premier groupe d'électrodes en forme de bandes parallèles, formées sur l'un desdits substrats, et un deuxième groupe d'électrodes en forme de bandes parallèles, formées sur le second substrat, lesdits premier et deuxième groupes de bandes étant agencés, l'un par rapport à l'autre, selon une relation d'orthogonalité.

7. Procédé selon l'une quelconque des revendications précédentes, dans lequel lesdites régions dudit matériau conducteur opaque sont réalisées par formation d'un film à l'aide dudit matériau conducteur opaque, et par enlèvement subséquent dudit matériau entre lesdites régions.

8. Procédé selon la revendication 7, dans lequel ladite étape d'enlèvement est exécutée par photolithographie et décapage chimique.

9. Procédé selon la revendication 7, dans lequel ladite étape d'enlèvement est exécutée par gravure au laser.

10. Procédé selon l'une quelconque des revendications 1 à 6, dans lequel lesdites régions dudit matériau conducteur opaque sont réalisées par application d'un masque d'agent de réserve sur ledit film de matériau conducteur transparent, formation d'un film dudit matériau conducteur opaque sur ledit masque et ledit matériau conducteur transparent, et enlèvement dudit masque conjointement avec les parties dudit matériau conducteur opaque, qui le recouvrent.

11. Procédé selon l'une quelconque des revendications précédentes, dans lequel ladite gravure au laser est effectuée au moyen d'un laser excimer.

12. Procédé selon l'une quelconque des revendications précédentes, dans lequel la largeur desdites régions de matériau conducteur opaque, avant la gravure au laser, est d'environ 30 µ.

13. Procédé selon l'une quelconque des revendications précédentes, dans lequel l'épaisseur dudit matériau conducteur transparent se situe entre 50 et 200 nm.
